# EUROPEAN PATENT APPLICATION

(11) **EP 3 712 293 A1**
(43) Date of publication of application: **23.09.2020**
(21) Application number: 17932567.5
(22) Date of filing: 28.12.2017
(51) Int. Cl.: C23C 2/12

(54) **COATING FOR HOT STAMPING-FORMED STEEL AND PRODUCTION METHOD THEREFOR**

(30) Priority: 16.11.2017 CN 201711137396
(71) Applicant: HBIS Company Limited, Shijiazhuang, Hebei 050023 (CN)
(72) Inventor: WANG, Xindong, Shijiazhuang Hebei 050023 (CN); LI, Jianxin, Shijiazhuang Hebei 050023 (CN); LIN, Zhangguo, Shijiazhuang Hebei 050023 (CN); XIONG, Ziliu, Shijiazhuang Hebei 050023 (CN); SUN, Li, Shijiazhuang Hebei 050023 (CN); LIU, Hongqiang, Shijiazhuang Hebei 050023 (CN); ZHOU, Guoping, Shijiazhuang Hebei 050023 (CN); QI, Changfa, Shijiazhuang Hebei 050023 (CN); LI, Jianying, Shijiazhuang Hebei 050023 (CN); WANG, Xuehui, Shijiazhuang Hebei 050023 (CN); LUO, Yang, Shijiazhuang Hebei 050023 (CN); DONG, Yikang, Shijiazhuang Hebei 050023 (CN); WANG, Jian, Shijiazhuang Hebei 050023 (CN); YANG, Lifang, Shijiazhuang Hebei 050023 (CN)
(74) Representative: Schweiger & Partners Patentanwälte und Rechtsanwältin PartGmbB
(86) International application number: PCT/CN2017/119191
(87) International publication number: WO 2019/095514

(57) **Abstract**

A coating layer for hot stamping-formed steel, which, on the basis of the total weight of the coating layer, comprises: 5.0wt%-20.0wt% of Si, 0.1wt%-10.0wt% of Ni, 0-2.0wt% of Ce, 0-2.0wt% of La, equal to or less than 1.0wt% of Fe and a balance is Al and inevitable impurities; a coating layer for hot stamping-formed steel, which, on the basis of the total weight of the coating layer, comprises: 1.0wt%-15.0wt% of Si, 0.5wt%-10.0wt% of Cu, 0.1wt%-1.0wt% of Cr, equal to or less than 1.0wt% of Fe and a balance is Al and inevitable impurities; and a coating layer for hot stamping-formed steel, which, on the basis of the total weight of the coating layer, comprises: 5.0wt%-20.0wt% of Si, 0.1wt%-10.0wt% of Ni, 0.1wt%-10.0wt% of Cu, 0-2.0wt% of Ce, 0-2.0wt% of La, 0.1wt%-1.0wt% of Cr, equal to or less than 1.0wt% of Fe and a balance is Al and inevitable impurities. Also disclosed is a method for the preparation of the coating layer for hot stamping-formed steel.

## Description

### BACKGROUND

### Technical Field

The present disclosure relates to a field of surface treatment of metal materials, and in particular, relates to a coating layer for hot stamping-formed steel and manufacturing method thereof.

### Background Art

At present, a coating layer for hot stamping-formed steel mainly includes Al-Si coating layer, GI coating layer, GA coating layer, X-TEC coating layer, and Zn-Ni coating layer. Al-Si coating layer, GI coating layer, and GA coating layer have been commercially available, while commercial applications of X-TEC coating layer and Zn-Ni coating layer are rarely seen.

ArcelorMittal company has developed a steel plate with Al-Si coating layer, which has good resistance to high temperature oxidation. However, the Al-Si coating layer is sensitive to temperature and deformation rate, and is easily cracked when subjected to hot stamping, so that a corrosion resistance of the Al-Si coating layer is lowered when the plate is exposed to an outside environment. In addition, the Al-Si coating layer is easily adhered to a ceramic roll after being melted during heating process, so that the ceramic roll needs to be cleaned frequently. In addition, the Al-Si coating layer does not have sacrificial protection properties, and cracks are prone to be corroded. Therefore, in recent years, the researchers have developed a GI/GA hot stamping coating layer technology.

Sumitomo, Thyssen, Posco, VAI, Arcelor companies and the like have developed a steel plate with GI/GA alloyed coating layer, which has good weldability and coating properties, and have good sacrificial protection properties, which can effectively prevent an oxidation peeling and decarburization of the steel plate during the heating process. However, the GI/GA alloyed coating layer will cause cracks to propagate into the plate during the hot stamping process, thereby affecting the use of the steel plate. In addition, in order to prevent the evaporation of Zn in the coating layer, a heating temperature should not be lower than 905 °C, and the narrow austenitization window also limits an application of the steel plate. In order to adapt to a requirements of hot stamped steel on the coating layer regarding cut protection performance and heating window, German Thyssen company developed the Gamma protect coating layer technology. The coating layer is electroplated Zn-10Ni layer, which has excellent friction performance, but the price is high and the productivity is low.

### SUMMARY

The present disclosure provides a coating layer for hot stamping-formed steel, and the hot stamping-formed steel having the coating layer is suitable for direct hot stamping and indirect hot stamping forming process, thereby producing a part having a complicated shape. The hot stamping-formed steel product and the hot stamped part having the coating layer have good welding properties, and when they are heated to 900 °C - 950 °C, the oxidation weight gain rate of the coating layer is less than 0.0018 g/(cm² × h). During hot stamping, the coating layer does not fall off, cracks or cracks slightly, does not bond to the mold, or slightly bond to the mold. Therefore, the product having the coating layer after hot stamping has a good surface quality and good coating and coating properties.

According to the present disclosure, many technical problems of the existing product having Al-Si coating layer can be solved, such as low melting point of the coating layer, easy formation of liquid metal brittleness, easy bonding to the roll, affecting the service life of the furnace roll, unsuitable for indirect hot stamping forming process and the like.

According to an exemplary embodiment of the present disclosure, a coating layer for hot stamping-formed steel may include: 5.0wt% - 20.0wt% of Si, 0.1wt% - 10.0wt% of Ni, 0 - 2.0 wt% of Ce, 0 - 2.0wt% of La, equal to or less than 1.0wt% of Fe, a balance is Al and inevitable impurities, based on a total weight of the coating layer.

According to an exemplary embodiment of the present disclosure, the coating layer may include: 6.0wt% - 10.0wt% of Si, 0.1wt% - 0.3wt% of Ni, 0.5wt% - 1.5wt% of Ce, 0wt% - 0.3wt% of La, equal to or less than 0.3wt% of Fe, a balance is Al and inevitable impurities, based on the total weight of the coating layer.

According to an exemplary embodiment of the present disclosure, a coating layer for hot stamping-formed steel may include: 1.0wt% - 15.0wt% of Si, 0.5wt% - 10.0wt% of Cu, 0.1wt% - 1.0wt% of Cr, equal to or less than 1.0wt% of Fe, a balance is Al and inevitable impurities, based on a total weight of the coating layer.

According to an exemplary embodiment of the present disclosure, the coating layer may include: 7.0wt% - 13.0wt% of Si, 0.5wt% - 1.5wt% of Cu, 0.1wt% - 0.3wt% of Cr, equal to or less than 0.3wt% of Fe, a balance is Al and inevitable impurities, based on the total weight of the coating layer.

According to an exemplary embodiment of the present disclosure, a method for manufacturing a coating layer for hot stamping-formed steel may include following steps: a hot dip coating: immersing a steel to be treated having a temperature of 600 °C - 840 °C into a coating solution having a temperature of 640 °C - 800 °C and keeping for 6s - 30s, wherein a composition of the coating solution is: 5.0wt% - 20.0wt % of Si, 0.1wt% - 10.0wt% of Ni, 0 - 2.0wt% of Ce, 0 - 2.0wt% of La, equal to or less than 1.0wt% of Fe, a balance is Al and inevitable impurities; a post-coating cooling: using nitrogen or air to cool the coated steel to 150 °C at a cooling rate of 6 °C/s - 30 °C/s; a heat treatment of the coating layer: heating the cooled steel to 800 ° C-950 ° C under a protection of nitrogen, and keeping for 2min-10min, and thereby obtaining the coating layer for hot stamping-formed steel.

According to an exemplary embodiment of the present disclosure, in the hot-dip coating, the steel to be treated having a temperature of 700°C - 750°C may be immersed in the coating solution having a temperature of 720°C - 790°C and kept for 10s-20s. In the post-coating cooling, a cooling rate may be 10°C/s - 15°C/s. In the heat treatment of the coating layer, the cooled steel may be heated to 890°C - 925°C, and kept for 5min - 8min.

According to an exemplary embodiment of the present disclosure, the steel to be treated may undergo a continuous annealing step before the hot dip coating. The continuous annealing step may use nitrogen-hydrogen mixed gas in which an oxygen content is equal to or less than 100 ppm, a dew point is -50°C - 20°C and a volume content of hydrogen is 3% - 25%.

According to an exemplary embodiment of the present disclosure, a method for manufacturing a coating layer for hot stamping-formed steel may comprise following steps: a hot-dip coating: immersing a steel to be treated having a temperature of 580° C-750°C into a coating solution having a temperature of 580°C-750°C and keeping for 6s - 30s, wherein, a composition of the coating solution is: 1.0wt% - 15.0wt% of Si, 0.5wt% - 10.0wt% of Cu, 0.1wt% - 1.0wt% of Cr, equal to or less than 1.0wt% of Fe, the balance is Al and inevitable impurities, wherein, during the hot dip coating, a air knife is sprayed with inert gas, a temperature of the inert gas is 20°C - 150°C, a thickness of the coating layer is controlled at 10µm - 25µm; a post-coating cooling: using an air cooling to cool the coated steel to equal to or less than 150°C with a cooling rate of 5°C/s - 15°C/s, and then cooling it to a room temperature by using water; a heat treatment of the coating layer: performing a heat treatment at a temperature of 700°C - 1000°C on the cooled steel, thereby obtaining the coating layer for hot stamping-formed steel.

According to an exemplary embodiment of the present disclosure, in the hot dip coating, the steel to be treated having a temperature of 620 °C - 700 °C may be immersed in the coating solution having a temperature of 620 °C - 720 °C, wherein, a temperature of the inert gas may be 60 °C - 100 °C, and a thickness of the coating layer may be 15µm - 20µm. In the post-coating cooling, a cooling rate may be 8 °C/s - 10 °C/s or 8 °C/s - 13 °C/s. In the heat treatment of the coating layer, a temperature of the heat treatment may be 750 °C-930 °C.

According to an exemplary embodiment of the present disclosure, a washing step may be performed before the hot dip coating, and the steel to be treated is washed until a residue on a one surface is ≤50 mg/m², and the surface reflectivity is ≥90%.

According to an exemplary embodiment of the present disclosure, a coating layer for hot stamping-formed steel may include: 5.0wt% - 20.0wt% of Si, 0.1wt% - 10.0wt% of Ni, 0.1wt%- 10.0wt% of Cu, 0- 2.0wt% of Ce, 0 - 2.0wt% of La, 0.1wt% - 1.0wt% of Cr, equal to or less than 1.0wt% of Fe, a balance is Al and inevitable impurities, based on a total weight of the coating layer.

According to an exemplary embodiment of the present disclosure, a method for manufacturing a coating layer for hot stamping-formed steel may comprise following steps: a hot-dip coating: immersing a steel to be treated having a temperature of 550 °C - 800 °C into a coating solution having a temperature of 570 °C - 850 °C and keeping for 6s- 30s, wherein, a composition of the coating solution is: 5.0wt%- 20.0wt% of Si, 0.1wt% - 10.0wt% of Ni, 0.1wt% - 10.0wt% of Cu, 0 - 2.0wt% of Ce, 0 - 2.0wt% of La, 0.1wt% - 1.0wt% of Cr, equal to or less than 1.0wt% of Fe, a balance is Al and inevitable impurities; a post-coating cooling: using nitrogen or air to cool the coated steel to 150 °C at a cooling rate of 4 °C/s - 25 °C/s; a heat treatment of the coating layer: performing a heat treatment on the cooled steel at a temperature of 700°C - 1000°C, and thereby obtaining the coating layer for hot stamping-formed steel.

According to an exemplary embodiment of the present disclosure, in the hot dip coating, the steel to be treated having a temperature of 680 °C - 780 ° C may be immersed in the coating solution having a temperature of 700 °C - 800 °C, and kept for 10s - 20s.
In the post-coating cooling, a cooling rate may be 8 ° C/s - 15 ° C/s; in the heat treatment of the coating layer step, a temperature of the heat treatment may be 750 °C - 930 °C.

According to an exemplary embodiment of the present disclosure, the steel to be treated may undergoe a continuous annealing step before the hot dip coating. The continuous annealing step may use nitrogen-hydrogen mixed gas in which an oxygen content is equal to or less than 100 ppm, a dew point is -50°C - 20°C and a volume content of hydrogen is 3% - 25%.

According to an exemplary embodiment of the present disclosure, a washing step may be performed before the hot dip coating, and the steel to be treated is washed until a residue on a one surface is ≤50 mg/m², and the surface reflectivity is ≥90%.

### BRIEF DESCRIPTION OF THE DRAWINGS

FIG. 1 is a scanning electron microscope image of a hot-formed steel having an Al-Si-Ni coating layer before heat treatment, according to an exemplary embodiment of the present disclosure.
FIG. 2 is a scanning electron microscope image of a hot-formed steel having an Al-Si-Ni-Cu coating layer before heat treatment, according to an exemplary embodiment of the present disclosure.
FIG. 3 is a scanning electron microscope image of a hot-formed steel having an Al-Si-Ni coating layer after hot stamping, according to an exemplary embodiment of the present disclosure.
FIG. 4 is a scanning electron microscope image of a hot-formed steel having an Al-Si-Ni-Cu coating layer after hot stamping, according to an exemplary embodiment of the present disclosure.

### DETAILED DESCRIPTION OF EXEMPLARY EMBODIMENTS

Hereinafter, the inventive concept will be described more fully with reference to the embodiments. However, the present disclosure may be embodied in many different forms and should not be construed as being limited to the embodiments set forth herein. Rather, the embodiments are provided so that the present disclosure will be thorough and complete, and the scope of the present disclosure will be fully conveyed to those skilled in the art.

The hot stamping-formed steel is mainly used for high-strength automotive parts, such as front and rear bumpers, door sills, A-pillars, B-pillars, C-pillars, frames, exhaust pipes, etc., and potential applications include aerospace heat and corrosion resistant materials, high temperature resistant construction materials and the like. The coating layer for hot stamping-formed steel usually uses Al-Si coating layer, but the Al-Si coating layer produced under the existing conditions has problems of low melting point, easy to produce liquid metal brittleness, easy to adhered to roll, affecting the service life of the furnace roll, and being not suitable for indirect hot stamping forming process and the like, to this end, the present disclosure proposes a coating layer for a hot stamping-formed steel having an excellent high temperature oxidation resistance and manufacturing method thereof.

According to the present disclosure, a coating layer having a high melting point alloy phase such as CuAl₃, Al₂Ni₃, Al₃Ni, and AlₓSi_{y}Fe_{z} may be formed, by adding an element such as Ni , Cu or the like into the Al-Si coating layer for the hot stamping-formed steel, thereby improving high temperature oxidation resistance of the coating layer. The coating layer according to the present disclosure may have better resistance to high temperature oxidation than the coating layer using the Al-Si alloy alone, and may effectively increase a melting point of the coating layer.

According to the present disclosure, the skin effect of Ni and / or Cu may be used to increase its concentration on a surface of the coating layer, and improve the high temperature oxidation resistance of the coating layer. The test results show that a content of Cu and / or Ni on the surface of the coating layer may be up to 3 times higher than an average content of Cu and / or Ni of the coating layer. Melting points of Ni and Cu are relatively high and higher than a hot stamping forming temperature of the steel, and thus they will not melt during heating and hot forming, which may improve the high temperature oxidation resistance of the coating layer.

In addition, the coating layer according to the present disclosure may form dense Al₂O₃ on the surface of the coating layer. After detecting, a content of the oxygen on the surface of the coating layer is close to 50%, a ratio of alloy elements to oxygen atoms is close to 2:3, and a thickness of the dense oxide layer may reach 0.4 microns. The dense oxide layer may prevent oxygen atoms from further infiltrating into the coating layer and the substrate, thereby ensuring the good high temperature oxidation resistance and corrosion resistance of the coating layer. Due to its resistance to high temperature oxidation, resistance to high temperature corrosion and resistance to normal temperature corrosion, the coating layer is the best choice for hot stamping-formed steel.

In addition, according to the present disclosure, it can be controlled that the alloy phases formed of Al, Si, Ni, Cu, and Fe may be uniformly distributed in the coating layer by using reasonable process means, and a skeleton structure with a high melting point and a high temperature corrosion resistance may be formed. The skeleton structure may support the coating layer. The interior of the skeleton structure composed of a high-melting point alloy phase is filled with Al-Si phase (with a small amount of Ni and Cu dissolved), which ensures the coordination between the phase with a high melting point and a resistance to high temperature oxidation and the structure with a relatively lower melting point but with a higher thermoformability, so that the thermoformability and high temperature oxidation resistance are balanced, and thus an optimal structure may be formed.

According to an embodiment of the present disclosure, an structure having a lower melting point but a higher thermoformability may contain Al of 96wt%, and dissolve Si of 1.77wt% and Ni of 1.32wt%, which has a melting point comparable to that of pure aluminum, but without the brittle phase, so it may exhibit a good thermoforming performance, and may ensure that the coating layer does not completely break during the hot stamping process.

In addition, the coating layer according to the present disclosure may also be added with rare earth elements. The rare earth elements in the coating layer may effectively refine the grain size, refine the aluminum phase (ie., Al-Si phase), solid-melt Cu, Ni and other alloys, thereby further improving the thermoformability of the coating layer. Rare earth elements may also increase the distribution density of alloy phases with high melting points, which may further improve the high temperature oxidation resistance of the coating layer.

The coating layer according to the present disclosure may also be added with Cr element, which mainly improves the corrosion resistance and high temperature oxidation resistance of the coating layer. In addition, the coating layer according to the present disclosure may also contain Fe element. The Fe element is mainly dissolved in a coating solution after the steel plate or the steel coil reacts with the coating solution, and the Fe element reacts with the Si and Al phase in the coating layer to form Al, Si, Fe alloy phases, thereby increasing the melting point of the coating layer.

Hereinafter, a coating layer for hot stamping-formed steel and manufacturing method thereof will be described in detail according to exemplary embodiments of the present disclosure.

According to embodiments of the present disclosure, based on a total weight of the hot-formed steel, the hot-formed steel may include: 0.19wt% - 0.30wt% of Carbon (C), 0.1wt% - 0.8wt% of Silicon (Si), 0.9 wt% - 2.0wt% of Manganese (Mn), 0.3wt% - 1.0wt% of Chromium (Cr), 0.01wt% - 0.05wt% of Titanium (Ti), equal to or less than 0.05wt% of Niobium (Nb), 0.0015wt% - 0.003wt % of Boron (B), and a balance is iron (Fe) and inevitable impurities. However, the present disclosure is not limited thereto. According to the embodiments of the present disclosure, the hot-formed steel may be a steel plate, a steel coil, a steel belt, or the like.

### Al-Si-Ni coating layer

According to one embodiment of the present disclosure, the coating layer for hot stamping-formed steel may be an Al-Si-Ni coating layer. Based on a total weight of the coating layer, a composition of the coating layer may include: 5.0 wt% - 20.0 wt% of Silicon (Si), 0.1wt% - 10.0wt% of Nickel (Ni), 0 - 2.0wt% of Cerium (Ce), 0 - 2.0wt% of Lanthanum (La) and less than or equal to 1.0wt% of Iron (Fe), and a balance is Aluminum (Al) and inevitable impurities according to the weight percentage.

Preferably, in the coating layer for hot stamping-formed steel, a content of Si may be 6.0wt% - 10wt%, 7.0wt% - 13.0wt%, 10.0wt% - 20.0wt%, 8.0wt% - 20.0wt% or 16.0wt% - 20.0wt%. Preferably, a content of Ni may be 0.1wt% - 0.3wt%, 0.1wt% - 1.5wt%, 1.5wt% - 3.0wt%, 2.0wt% - 5.0wt%, 5.0wt% - 8.0wt% or 6.0wt % - 9.0wt%. Preferably, a content of Ce may be 0 - 0.5wt%, 0.5wt% - 1.5wt% or 0.1wt% - 0.7wt%. Preferably, a content of La may be 0 - 0.3wt%, 0.3wt% - 1.0wt%, 0.5wt% - 1.0wt% or 1.0wt% - 2.0wt%. Preferably, a content of Fe may be not more than 0.3wt%, 0.3wt% - 1.0wt%, not more than 0.5wt% or 0.5wt% - 0.8wt%.

In addition, although Ce and La may refine a structure of the coating layer, it will increase the cost, thereby bringing certain difficulties to industrialization. Therefore, the coating layer according to the exemplary embodiment of the present disclosure may not include Ce and La.

According to the present disclosure, a method of manufacturing the Al-Si-Ni coating layer for hot stamping-formed steel mainly includes hot-dip coating, post-coating cooling, and heat treatment of the coating layer.

Here, it should be noted that the manufacture of the hot stamping-formed steel includes smelting, continuous casting, hot rolling, cold rolling, continuous hot dip coating, and the like. The embodiments of the present disclosure mainly relate to the composition range and control mechanism of the coating layer.

According to the present disclosure, hot-rolled hot-formed steel coil or cold-rolled hot-formed steel coil becomes a hot-formed steel product with the coating layer after being subjected to annealing, hot dip coating, and post-coating cooling, then the hot-formed steel product is subjected to blanking, pre-forming, heat treatment, hot stamping-forming to form into part products. Alternatively, the pre-forming step may be omitted. In the present disclosure, the hot dip coating process involves a temperature at which the steel sheet enters the coating solution, a temperature of the coating solution, a post-coating cooling method, a post-coating cooling rate, and the like.

Each step of a method of manufacturing the coating layer for hot stamping-formed steel according to an exemplary embodiment of the present disclosure will now be described in detail.

In the hot dip coating, a steel to be treated (hot-formed steel plate or hot-formed steel coil) having a temperature of 600 °C - 840 °C may be immersed in a coating solution having a temperature of 640 °C - 800 °C, and the duration of the hot-dip coating is 6s - 30s. Based on a total weight of the coating solution, the coating solution may include the following components: 5.0wt% - 20.0wt% of Si, 0.1wt% - 10.0wt% of Ni, 0 - 2.0wt% of Ce, 0 - 2.0wt% of La , equal to or less than 1.0 wt% of Fe, the balance is Al and inevitable impurities. According to a preferred embodiment, through having the temperature of the coating solution to be higher than the temperature of the steel to be treated by 0 °C - 40 °C, it can effectively ensure that oxides on the surface of the steel to be treated are completely reduced by the coating solution, thereby improving a bonding ability of the coating layer and the steel to be treated.

In the post-coating cooling, the coated steel (hot-formed steel after undergoing the hot dip coating) can be cooled to 150 °C by using nitrogen or air, and the cooling rate is 6 °C/s - 30 °C/s. Therefore, the alloy phases Al₂Ni₃, Al₃Ni, AlₓSi_{y}Fe_{z}, and the like in the coating solution may be uniformly precipitated.

After the post-coating cooling step, a heat treatment is preformed on the coating layer.

In the heat treatment of the coating layer, the cooled steel may be heated to 800 °C - 950 °C under the protection of nitrogen, and the temperature is kept for 2 min - 10 min, thereby obtaining the coating layer for hot stamping-formed steel.

Preferably, in the hot dip coating, the steel to be treated having the temperature of 700 °C - 750 °C may be immersed in the coating solution having the temperature of 720 °C - 790 °C for 10s - 20s. More preferably, in the hot dip coating, the steel to be treated having the temperature of 700 °C may be immersed in the coating solution having the temperature of 720 °C for 12s. Alternatively, in the hot dip coating process, an air knife may be sprayed with inert gas, a temperature of the inert gas may be 20 °C - 150 °C, and a thickness of the coating layer may be controlled at 10 µm - 25 µm. Spraying with the inert gas may effectively control a formation of dense oxides on the surface of the coating layer, control an amount and a distribution of the dense oxides, and increase the high temperature oxidation resistance of the coating layer.

Preferably, in the post-coating cooling, a cooling rate of the coated steel may be 10 °C/s - 15 °C/s, 12 °C/s - 18 °C/s or 20 °C/s -25°C/s. In a preferred embodiment of the present disclosure, in the post-coating cooling, the cooling rate of the coated steel may be 10 °C/s, 15 °C/s or 20 °C/s.

Preferably, the cooled steel may be heated to 890 °C - 925 °C and the temperature is kept for 5min - 8 min. More preferably, in the heat treatment of the coating layer, the cooled steel may be heated to 890 °C and kept for 5 min.

According to an exemplary embodiment of the present disclosure, the steel to be treated may be washed before the hot dip coating. A washing process is: alkali washing-alkali brushing -- alkali washing -- water brushing -- electrolytic washing -- rinsing--drying, so as to ensure a residue on a single-sided surface of the steel to be treated after washing ≤50 mg/m², and a surface reflectivity ≥90%.Preferably, the steel to be treated may be washed to the residue on the single-sided surface ≤40 mg/m² and the surface reflectivity ≥95%.

According to the exemplary embodiment of the present disclosure, before the hot dip coating, the steel to be treated may be continuously annealed with nitrogen-hydrogen mixed gas. Since oxygen is inevitably mixed, an oxygen content of the nitrogen-hydrogen mixed gas is controlled to be equal to or less than 100 ppm, a dew point of the nitrogen-hydrogen mixed gas is controlled to be -50 °C - 20 °C, and a volume content of hydrogen of the nitrogen-hydrogen mixed gas is controlled to be 3% - 25%. Preferably, the dew point of the nitrogen-hydrogen mixed gas may be -30 °C - 10 °C, -10 °C -10 °C, or 0 °C - 10 °C. More preferably, the dew point of the nitrogen-hydrogen mixed gas may be -20 °C, -30 °C or -10 °C. Preferably, the hydrogen content of the nitrogen-hydrogen mixed gas may be 5 vol% - 8 vol%, or 8 vol% - 10 vol%. More preferably, the hydrogen content of the nitrogen-hydrogen mixed gas may be 3 vol%, 5 vol%, or 8 vol%.

### Al-Si-Cu coating layer

According to another exemplary embodiment of the present disclosure, copper (Cu) may be selected to manufacture the coating layer for hot stamping-formed steel, instead of Ni. In other words, the coating layer for hot stamping-formed steel may also be an Al-Si-Cu coating layer. Based on the total weight of the coating layer, the coating layer may include: 1.0wt% - 15.0wt% of Si, 0.5wt% - 10.0wt% of Cu, 0.1wt% - 1.0wt% of Chromium (Cr), equal to or less than 1.0wt% of Fe, and a balance is Al and inevitable impurities.

Preferably, in the coating layer for hot stamping-formed steel, a content of Si may be 6.0wt% - 10wt%, 7.0wt% - 13.0wt%, 8.0wt% - 13.0wt% or 5.0wt% -13.0wt%. Preferably, a content of Cu may be 0.5wt% - 1wt%, 0.5wt% - 1.5wt%, 1.0wt% - 5.0wt% or 5.0wt% - 8.0wt%. Preferably, a content of Cr may be 0.1wt% - 0.15wt%, 0.1wt% - 0.3wt% or 0.5wt% - 1.0wt%. Preferably, a content of Fe may not exceed 0.3wt%, 0.3wt% - 1.0wt%, 0 - 0.5wt% or 0.5wt% - 0.8wt%.

According to the present disclosure, a method of manufacturing the Al-Si-Cu coating layer for hot stamping-formed steel may mainly include the hot dip coating, the post-coating cooling, and the heat treatment of the coating layer.

In the hot-dip coating, the steel to be treated (hot-formed steel plate or hot-formed steel coil) having the temperature of 580 °C - 750 °C may be immersed in the coating solution having the temperature of 580 °C - 750 °C, and the time of the hot-dip coating is 6s - 30s . Based on the total weight of the coating solution, the composition of the coating solution is: 1.0wt% - 15.0wt% of Si, 0.5wt% - 10.0wt% of Cu, 0.1wt% - 1.0wt% of Cr, equal to or less than 1.0 wt% of Fe, a balance is Al and inevitable impurities. In the hot dip coating process, the air knife is sprayed with inert gas, the temperature of the inert gas may be 20 °C - 150 °C, and the thickness of the coating layer may be controlled within 10µm - 25µm. Spraying with the inert gas may effectively control the formation of the dense oxides on the surface of the coating layer, and control the amount and the distribution of the dense oxides, and increase the high temperature oxidation resistance of the coating layer.

In the post-coating cooling, air cooling may be used to cool the coated part (hot-formed steel plate or hot-formed steel coil after undergoing the hot dip coating) to equal to or less than 150 °C, and then it is cooled to room temperature by water. A cooling rate of the air cooling is 5 °C/s - 15 °C/s, and therefore, it may ensure an uniform precipitation of the alloy phases CuAl₃ and AlₓSi_{y}Fe_{z} in the coating solution.

After the post-coating cooling step, the heat treatment may be performed on the coating layer. In the heat treatment of the coating layer, the heat treatment may be performed on the coated part (hot-formed steel plates or hot-formed steel coils after the hot-dip coating and the post-coating cooling) after cooling at the temperature of 700 °C - 1000 °C, and thereby obtaining the coating layer for hot stamping-formed steel. Nitrogen protection is not required in the heat treatment of the coating layer of the Al-Si-Cu coating layer.

Preferably, in the hot dip coating, the steel to be treated having the temperature of 620 °C - 700 °C, 620 °C - 750 °C or 580 °C - 700 °C may be immersed in the coating solution having the temperature of 620 °C - 720 °C, 640 °C - 750 °C or 600 °C - 700 °C. More preferably, in the hot dip coating, the steel to be treated having the temperature of 620 ° C may be immersed in the coating solution having the temperature of 620 °C. Preferably, in the hot dip coating process, the temperature of the inert gas may be 20 °C - 60 °C, 60 °C - 100 °C, or 80 °C - 150 °C, and the thickness of the coating layer may be 10 µm - 15 µm, 15 µm - 20 µm, or 20 µm - 25 µm. More preferably, in the hot dip coating process, the temperature of the inert gas may be 60 ° C, and the thickness of the coating layer may be 20 µm.

Preferably, in the post-coating cooling, the cooling rate of the air cooling may be 5 °C /s - 10 °C/s, 8 °C/s - 10 °C/s, 8 °C/s - 13 °C/s or 10 °C/s - 13 °C/s. More preferably, in the post-coating cooling, the cooling rate of the air cooling may be 8 °C/s.

Preferably, in the heat treatment of the coating layer, the temperature of the heat treatment may be 750 °C - 800 °C, 750 °C - 930 °C, or 800 °C - 950 °C. Preferably, in the heat treatment of the coating layer, the temperature of the heat treatment may be 930 °C.

According to the exemplary embodiment of the present disclosure, the steel to be treated may be washed before the hot dip coating. The washing process is: alkali washing-alkali brushing-alkali washing-water brushing-electrolytic washing-rinsing-drying, so as to the residue on a single-sided surface of the steel to be treated after washing ≤50 mg/m², and the surface reflectivity ≥90%.Preferably, the steel to be treated may be washed to the residue on the single-sided surface ≤40 mg/m² and the surface reflectivity ≥95%.

According to the exemplary embodiment of the present disclosure, before the hot dip coating, the steel to be treated may be continuously annealed, so that internal oxidation of the steel to be treated may be effectively controlled to obtain a substrate with good coating and coating performance. The continuous annealing process may use the nitrogen-hydrogen mixed gas, the oxygen content of the nitrogen-hydrogen mixed gas is equal to or less than 100 ppm, the dew point of the nitrogen-hydrogen mixed gas is - 50 °C - 20 °C, and the volume content of the hydrogen of the nitrogen-hydrogen mixed gas is 3% - 25%. Preferably, the dew point of the nitrogen-hydrogen mixed gas may be -30 °C - 10 °C or -10 °C - 10 °C. More preferably, the dew point of the nitrogen-hydrogen mixed gas may be -20 °C, -30 °C or -10 °C. Preferably, the hydrogen content of the nitrogen-hydrogen mixed gas may be 5 vol% - 8 vol%, or 8 vol% - 10 vol%. More preferably, the hydrogen content of the nitrogen-hydrogen mixed gas may be 3 vol%, 5 vol%, or 8 vol%.

### Al-Si-Ni-Cu coating layer

According to yet another exemplary embodiment of the present disclosure, Cu and Ni may be used to manufacture the coating layer for hot stamping-formed steel. In other words, the coating layer for hot stamping-formed steel may also be an Al-Si-Ni-Cu coating layer. Based on the total weight of the coating layer, the coating layer may include: 5.0wt% - 20.0wt% of Si, 0.1wt% - 10.0wt% of Ni, 0.1wt% - 10.0wt% of Cu, 0 - 2.0wt% of Ce, 0 - 2.0 wt% of La, 0.1wt% - 1.0wt% of Cr, equal to or less than 1.0wt% of Fe, a balance is Al and inevitable impurities.

Preferably, in the coating layer for hot stamping-formed steel, a content of Si may be 6.0wt% - 10.0wt%, 7.0wt% - 13.0wt%, 8.0wt% - 13.0wt% or 10.0wt% - 20.0wt% . Preferably, Ni may be 0.1wt% - 0.3wt%, 0.1wt% - 1.5wt%, 1.5wt% - 3.0wt%, 2.0wt% - 5.0wt%, 5.0wt% - 8.0wt% or 6.0wt% - 9.0wt%. Preferably, a content of Ce may be 0 - 0.5wt%, 0.5wt% - 1.5wt% or 0.1wt% - 0.7wt%. Preferably, a content of La may be 0 - 0.3wt%, 0.3wt% - 1.0wt%, 0.5wt% - 1.0wt% or 1.0wt% - 2.0wt%. Preferably, a content of Cu may be 0.5wt% - 1.0wt%, 0.5wt% - 1.5wt%, 1.0wt% - 5.0wt% or 5.0wt% - 8.0wt%. Preferably, a content of Cr may be 0.1wt% - 0.15wt%, 0.1wt% - 0.3wt% or 0.5wt% - 1.0wt%. Preferably, a content of Fe may be 0 - 0.3wt%, 0.3wt% - 1.0wt%, 0 - 0.5wt% or 0.5wt% - 0.8wt%.

According to the present disclosure, a method of manufacturing the coating layer for hot stamping-formed steel may mainly include the hot dip coating, the post-coating cooling, and the heat treatment of the coating layer.

In the hot dip coating, the steel to be treated (hot-formed steel plate or hot-formed steel coil) having the temperature of 550 °C - 800 °C may be immersed in the coating solution having the temperature of 570 °C - 850 °C, and the hot dip coating may be kept for 6s - 30s. Based on the total weight of the coating solution, the composition of the coating solution is: 5.0wt% - 20.0wt% of Si, 0.1wt% - 10.0wt% of Ni, 0.1wt% - 10.0wt% of Cu, 0 - 2.0wt% of Ce, 0 - 2.0wt% of La , 0.1wt% - 1.0wt% of Cr, equal to or less than 1.0wt% of Fe, a balance is Al and inevitable impurities.

In the post-coating cooling, nitrogen or air may be used to cool the coated steel to 150 °C, the cooling rate is 4 °C/s - 25 °C/s, so that it may ensure the uniform precipitation of the alloy phases.

After the post-coating cooling, the heat treatment may be performed on the coating layer. In the heat treatment of the coating layer, the heat treatment may be performed on the coated part after cooling at the temperature of 700 °C - 1000 °C, and thereby obtaining the coating layer for hot stamping-formed steel.

Preferably, in the hot dip coating, the steel to be treated having the temperature of 680 ° C - 700 °C, 650 °C - 750 °C or 680 °C - 700 °C may be immersed in the coating solution having the temperature of 700 °C - 720 °C, 680 °C - 770 °C or 700 °C - 800 °C, and the time of the hot dip coating may be 15s - 25s, 15s - 20s or 10s - 20s.

Preferably, in the post-coating cooling, the cooling rate of the coated steel may be 8 °C/s- 15 °C/s.

Preferably, in the heat treatment of the coating layer, the temperature of the heat treatment may be 750 °C - 800 °C, 750 °C -930 °C, or 800 °C - 950 °C. Preferably, in the heat treatment of the coating layer, the temperature of the heat treatment may be 930 °C.

According to the exemplary embodiment of the present disclosure, before the hot dip coating, the steel to be treated may also be continuously annealed, the continuous annealing process may use a nitrogen-hydrogen mixed gas of which the oxygen content is equal to or less than 80 ppm, the dew point is -50 °C - 20 °C, and the volume content of the hydrogen is 3% - 25%. Preferably, the dew point of the nitrogen-hydrogen mixed gas may be -30 °C - 10 °C or -10 °C - 10 °C. More preferably, the dew point of the nitrogen-hydrogen mixed gas may be -20 °C, -30 °C or -10 °C. Preferably, the hydrogen content of the nitrogen-hydrogen mixed gas may be 5 vol% - 8 vol%, or 8 vol% - 10 vol%. More preferably, the hydrogen content of the nitrogen-hydrogen mixed gas may be 3 vol%, 5 vol%, or 8 vol%.

According to the exemplary embodiment of the present disclosure, the washing step may also be performed before the hot-dip coating step, and the steel to be treated may be washed to the residue on the single-sided surface ≤50 mg/m² and the reflectivity of the surface≥90%. Preferably, the steel to be treated may be washed to the residue on the single-sided surface ≤40 mg/m² and the surface reflectivity ≥95%.

Preferably, the process flow of manufacturing the coating layer for hot stamping-formed steel may be: washing of the steel plate or steel coil (substrate) to be treated-continuous annealing-hot dip coating-post-coating cooling- heat treatment of the coating layer.

The following embodiments 1 to 6 describe the composition of the coating solution used to manufacture the Ni-containing coating layer and main process parameters and main properties of the obtained coating layer. The embodiments 1 to 6 use the components of the coating solution in Table 1, respectively, and are manufactured according to the main process parameters in Table 2. The main properties of the obtained coating layer are shown in Table 3.

**Table 1 Composition of coating solution (wt%)**

| | Al | Si | Ni | Ce | La | Fe |
|---|---|---|---|---|---|---|
| Embodiment 1 | 91.1 | 8.2 | 0.1 | 0.2 | 0.2 | 0.2 |
| Embodiment 2 | 82.6 | 6.0 | 10.0 | 0.3 | 0.8 | 0.3 |
| Embodiment 3 | 87.7 | 10.0 | 1.0 | 0.5 | 0.2 | 0.6 |
| Embodiment 4 | 75.7 | 20.0 | 2.0 | 0.7 | 0.6 | 1.0 |
| Embodiment 5 | 83.4 | 11.0 | 3.0 | 1.5 | 0.7 | 0.4 |
| Embodiment 6 | 90.0 | 9.0 | 0.3 | 0.0 | 0.0 | 0.7 |

**Table 2 Main process parameters**

| | Continuous annealing of substrate | | | Hot dip coating and Post-coating cooling | | | | Heat treatment of coating layer | |
|---|---|---|---|---|---|---|---|---|---|
| Embodiment | Daw point (°C) | Oxygen content (ppm) | Hydrogen content (vol%) | Tempera ture of steel coil (°C) | Temperature of coating solution (°C) | Time of hot dip coating (s) | Rate of post-coating cooling (°C/s) | Heating temperat ure (°C) | Keeping time (min) |
| 1 | -22 | 10 | 3 | 690 | 710 | 10 | 10 | 890 | 5 |
| 2 | -31 | 30 | 4 | 780 | 640 | 12 | 18 | 850 | 10 |
| 3 | -42 | 20 | 25 | 630 | 680 | 18 | 6 | 950 | 4 |
| 4 | 5 | 80 | 8 | 810 | 770 | 26 | 12 | 800 | 2 |
| 5 | -3 | 60 | 12 | 720 | 690 | 28 | 30 | 925 | 8 |
| 6 | 18 | 3 | 23 | 620 | 790 | 6 | 25 | 875 | 6 |

In Table 2, the temperature of steel coil refers to the temperature when the steel coil to be treated is immersed in the coating solution, that is, the steel coil to be treated having said temperature is immersed in the coating solution.

**Table 3 Main properties of coating layer**

| Emb odim ent | Detection after heat treatment | | Detection after hot stamping | | |
|---|---|---|---|---|---|
| | Surface state of coating layer | Weight gain rate of coating layer (cm²×h) | Bonding state of coating layer and steel coil | Surface state of coating layer | Whether coating layer is bonded to mold |
| 1 | Almost no oxidation | 0.0016 | good | No cracks, no detachment | no |
| 2 | Almost no oxidation | 0.0015 | good | Slightly cracked | slight |
| 3 | Almost no oxidation | 0.0014 | good | No cracks, no detachment | no |
| 4 | Almost no oxidation | 0.0015 | good | No cracks, no detachment | no |
| 5 | Almost no oxidation | 0.0016 | good | Slightly cracked | no |
| 6 | Almost no oxidation | 0.0010 | good | No cracks, no detachment | slight |

As described above, the Ni-containing coating layer manufactured according to the embodiment of the present disclosure may have good high temperature oxidation resistance, tightly bond with the steel coil, and have no cracks, detachment on the surface of the coating layer, and not be bonded to the mold.

The following embodiments 7 to 12 describe the composition of the coating solution used to manufacture the Cu-containing coating layer and main process parameters and main properties of the manufactured coating layer. The embodiments 7 to 12 use the components of the coating solution in Table 4, respectively, and are manufactured according to the main process parameters in Table 5. The main properties of the manufactured coating layer are shown in Table 6.

**Table 4 Composition of coating solution (wt%)**

| Embodiment | Al | Si | Cu | Cr | Fe |
|---|---|---|---|---|---|
| 7 | 91.4 | 6 | 2 | 0.2 | 0.4 |
| 8 | 87.9 | 10 | 1.5 | 0.4 | 0.2 |
| 9 | 86.7 | 8 | 5 | 0.2 | 0.1 |
| 10 | 84 | 5 | 10 | 0.3 | 0.7 |
| 11 | 75.6 | 15 | 8 | 1 | 0.4 |
| 12 | 85.3 | 13 | 0.5 | 0.8 | 0.4 |

**Table 5 Main process parameters**

| Emb odim ent | State of substrate | | Hot dip coating and post-coating cooling | | | | Air knife and thickness of the coating layer | | Heat treatment | |
|---|---|---|---|---|---|---|---|---|---|---|
| | Residue (mg/m²) | Reflecti vity (%) | Temperat ure of steel plate (°C) | Temperat ure of hot dip coating (°C) | Time of hot dip coating (s) | Rate of post-coating cooling (°C/s) | Temperat ure of Nitrogen (°C) | Thicknes s of coating layer (µm) | Heating temperatu re (°C) | Keeping time (min) |
| 7 | 26 | 95 | 610 | 620 | 6 | 8 | 70 | 16 | 930 | 5 |
| 8 | 20 | 94 | 710 | 670 | 6 | 8 | 60 | 10 | 950 | 5 |
| 9 | 30 | 92 | 650 | 590 | 7 | 5 | 120 | 20 | 800 | 3 |
| 10 | 50 | 90 | 590 | 640 | 5 | 12 | 30 | 18 | 700 | 5 |
| 11 | 47 | 95 | 710 | 700 | 8 | 10 | 130 | 24 | 950 | 4 |
| 12 | 21 | 94 | 720 | 720 | 5 | 15 | 90 | 19 | 900 | 5 |

**Table 6 Main performance indexes of coating layer**

| Embo dimen t | Detection after heat treatment | | Detection after hot stamping | | | Corrosion resistance |
|---|---|---|---|---|---|---|
| | Surface state of coating layer | Weight gain rate of coating layer (cm²×h) | Bonding state of coating layer and substrate | Surface state of coating layer | Whether coating layer is bonded to mold | Salt spray corrosion 500h corrosion amount (g/m²) |
| 7 | Almost no oxidation | 0.0014 | no | No cracks, no detachment | slight | 30 |
| 8 | Almost no oxidation | 0.0012 | no | Slightly cracked | slight | 22 |
| 9 | Almost no oxidation | 0.0011 | no | No cracks, no detachment | no | 38 |
| 10 | Almost no oxidation | 0.0012 | no | No cracks, no detachment | no | 23 |
| 11 | Almost no oxidation | 0.0014 | no | Slightly cracked | no | 45 |
| 12 | Almost no oxidation | 0.0012 | no | No cracks, no detachment | no | 21 |

According to the above embodiments 7 to 12, the Cu-containing coating layer may have good high temperature oxidation resistance, a small weight gain ratio of the coating layer, tightly bond with the substrate, have no cracks, detachment on the surface of the coating layer, and not be bonded to the mold, and have good corrosion resistance.

The following Embodiments 13 to 18 describe the composition of the coating solution used to manufacture the coating layer containing Cu and Ni and main process parameters and main properties of the manufactured coating layer. The embodiments 13 to 18 use the coating solution in Table 7, respectively, and are manufactured according to the main process parameters in Table 8. The main properties of the manufactured coating layer are shown in Table 9.

**Table 7 Composition of coating solution (wt%)**

| Embodiment | Al | Si | Cu | Ni | Ce | La | Cr | Fe |
|---|---|---|---|---|---|---|---|---|
| 13 | 93.7 | 5 | 0.2 | 0.3 | 0.1 | 0.4 | 0.1 | 0.2 |
| 14 | 90.3 | 8 | 0.5 | 0.5 | 0 | 0 | 0.2 | 0.5 |
| 15 | 76 | 10 | 10 | 2 | 0.4 | 0.8 | 0.4 | 0.4 |
| 16 | 61.6 | 20 | 8 | 8 | 0.6 | 0.6 | 1 | 0.2 |
| 17 | 72.1 | 15 | 0.3 | 10 | 0.8 | 0.2 | 0.8 | 0.8 |
| 18 | 73.7 | 12 | 5 | 6 | 1 | 0.7 | 0.6 | 1 |

**Table 8 Main process parameters**

| Embodiment | hot dip coating and post-coating cooling | | | | Air knife and thickness of the coating layer | | Heat treatment | |
|---|---|---|---|---|---|---|---|---|
| | Temperat ure of steel plate (°C) | Temperat ure of hot dip coating (°C) | Time of hot dip coating (s) | Rate of post-coating cooling (°C/s) | Temperat ure of Nitrogen (°C) | Thicknes s of coating layer (µm) | Heating temperatu re (°C) | Keeping time (min) |
| 13 | 660 | 680 | 12 | 12 | 70 | 23 | 900 | 5 |
| 14 | 700 | 730 | 8 | 15 | 80 | 25 | 880 | 5 |
| 15 | 690 | 700 | 6 | 6 | 60 | 18 | 850 | 5 |
| 16 | 590 | 610 | 10 | 8 | 120 | 20 | 820 | 5 |
| 17 | 680 | 660 | 6 | 10 | 90 | 16 | 850 | 5 |
| 18 | 620 | 640 | 8 | 14 | 85 | 17 | 800 | 5 |

**Table 9 Main performance indexes of coating layer**

| Embo diment | Detection after heat treatment | | Detection after hot stamping | | | Corrosion resistance |
|---|---|---|---|---|---|---|
| | Surface state of coating layer | Weight gain rate of coating layer (cm²×h) | Bonding state of coating layer and substrate | Surface state of coating layer | Whether coating layer is bonded to mold | Salt spray corrosion 500h corrosion amount (g/m²) |
| 13 | Almost no oxidation | 0.0012 | no | No cracks, no detachment | slight | 30 |
| 14 | Almost no oxidation | 0.0014 | no | Slightly cracked | slight | 20 |
| 15 | Almost no oxidation | 0.0013 | no | No cracks, no detachment | no | 10 |
| 16 | Almost no oxidation | 0.0018 | no | No cracks, no detachment | no | 20 |
| 17 | Almost no oxidation | 0.0017 | no | Slightly cracked | no | 25 |
| 18 | Almost no oxidation | 0.0015 | no | No cracks, no detachment | no | 21 |

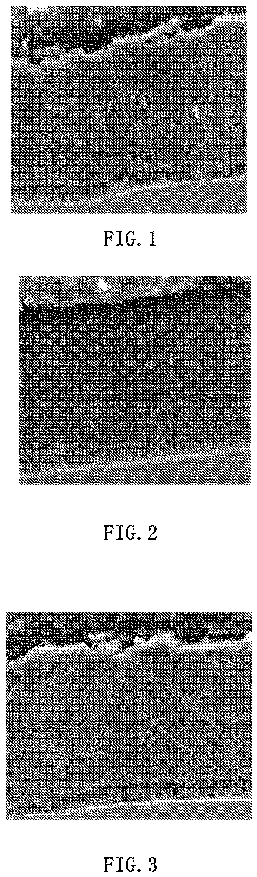

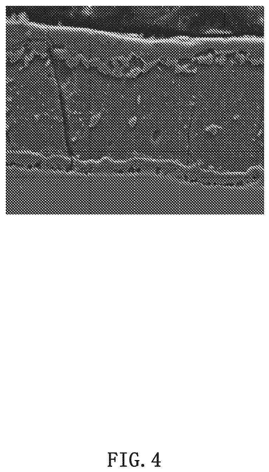

The present disclosure will be described more clearly below with reference to the drawings. FIG. 1 is a scanning electron microscope image of the hot-formed steel having the Al-Si-Ni coating layer before heat treatment according to the embodiment 3 of the present disclosure. FIG.2 is a scanning electron microscope image of the hot-formed steel having the Al-Si-Ni-Cu coating layer before heat treatment according to the embodiment 14 of the present disclosure. FIG.3 is a scanning electron microscope image of the hot-formed steel having the Al-Si-Ni coating layer after hot stamping according to the embodiment 3 of the present disclosure. FIG.4 is a scanning electron microscope image of the hot-formed steel having the Al-Si-Ni-Cu coating layer after hot stamping according to the embodiment 14 of the present disclosure.

Through comparing and analyzing FIGS. 1 and 2, it can be found that an alloy phase of the Al-Si-Ni coating layer is mainly strip-shaped, while an alloy phase of the Al-Si-Ni-Cu coating layer is mainly granular or massive, and therefore, compared with an structu re of the Al-Si-Ni coating layer, the uniformity of the structure of the Al-Si-Ni-Cu coating layer is improved, the stamping performance of the coating layer is improved, and cracking is less likely to occur. In addition, the combined addition of Cu and Ni improves the surface state of the coating layer, which makes the surface of the coating layer more continuous; meanwhile, the bright white oxide layer on the surface of the coating layer is more uniform and dense, and the high temperature oxidation resistance of the coating layer is also improved.

Through comparing and analyzing FIGS. 3 and 4, it can be found that the Al-Si-Ni-Cu coating layer after hot stamping inherits a better structure uniformity before hot stamping, and the entire coating layer almost becomes an alloy phase, and thus the oxidation resistance of the coating layer is obvious improved. And, a joint between the coating layer and the hot-formed steel substrate also maintains adhesion performance, the joint between the coating layer and the hot-formed steel substrate prevents crack propagation well. The oxide layer on the surface of the coating layer is more continuous and dense, showing good corrosion resistance. The two elements of Cu and Ni are mainly in a free state and an alloy state in the coating layer. When they are in the free state, they may accumulate on the surface of the coating layer and may form an infinite solid solution. However, the melting points of Cu and Ni are much higher than those of the Al-Si coating layer, the combined addition of Cu and Ni may further improve the high temperature oxidation resistance of the coating layer, since the Al-Si coating layer itself also has the high temperature oxidation resistance. The combined addition of Cu and Ni makes the solidification process of the coating layer uniform, and thus the struct ure is more uniform, and the surface of the coating layer is smoother and shows the continuity and compactness of the oxide layer.

Although the present disclosure has been specifically shown and described with reference to exemplary embodiments of the present disclosure, those skilled in the art will understand that various changes in form and detail can be made here without departing from the spirit and scope of the present disclosure as defined by the appended claims and their equivalents. The embodiments should be considered only in a descriptive sense and not for limiting purposes. Therefore, the scope of the present disclosure is not defined by the detailed description of the present disclosure but by the claims, and all differences within the scope will be interpreted as being included in the present disclosure.

## Claims

1. A coating layer for hot stamping-formed steel, comprising: 5.0wt% - 20.0wt% of Si, 0.1wt% - 10.0wt% of Ni, 0 - 2.0 wt% of Ce, 0 - 2.0wt% of La, equal to or less than 1.0wt% of Fe, a balance is Al and inevitable impurities, based on a total weight of the coating layer.

2. The coating layer for hot stamping-formed steel according to claim 1, wherein the coating layer comprises: 6.0wt% - 10.0wt% of Si, 0.1wt% - 0.3wt% of Ni, 0.5wt% - 1.5wt% of Ce, 0wt% - 0.3wt% of La, equal to or less than 0.3wt% of Fe, a balance is Al and inevitable impurities, based on the total weight of the coating layer.

3. A coating layer for hot stamping-formed steel, comprising: 1.0wt% - 15.0wt% of Si, 0.5wt% - 10.0wt% of Cu, 0.1wt% - 1.0wt% of Cr, equal to or less than 1.0wt% of Fe, a balance is Al and inevitable impurities, based on a total weight of the coating layer.

4. The coating layer for hot stamping-formed steel according to claim 3, wherein the coating layer comprises: 7.0wt% - 13.0wt% of Si, 0.5wt% - 1.5wt% of Cu, 0.1wt% - 0.3wt% of Cr, equal to or less than 0.3wt% of Fe, a balance is Al and inevitable impurities, based on the total weight of the coating layer.

5. A method for manufacturing a coating layer for hot stamping-formed steel, comprising:
a hot-dip coating: immersing a steel to be treated having a temperature of 600 °C - 840 °C into a coating solution having a temperature of 640 °C - 800 °C and keeping for 6s - 30s, wherein a composition of the coating solution is: 5.0wt% - 20.0wt % of Si, 0.1wt% - 10.0wt% of Ni, 0 - 2.0wt% of Ce, 0 - 2.0wt% of La, equal to or less than 1.0wt% of Fe, a balance is Al and inevitable impurities;
a post-coating cooling: using nitrogen or air to cool the coated steel to 150 °C at a cooling rate of 6 °C/s - 30 °C/s;
a heat treatment of the coating layer: heating the cooled steel to 800 ° C-950 ° C under a protection of nitrogen, and keeping the temperature for 2min-10min, and thereby obtaining the coating layer for hot stamping-formed steel.

6. The method according to claim 5, wherein in the hot-dip coating, the steel to be treated having a temperature of 700°C - 750°C is immersed in the coating solution having a temperature of 720°C - 790°C and kept for 10s - 20s;
in the post-coating cooling, a cooling rate is 10°C/s - 15°C/s;
in the heat treatment of the coating layer, the cooled steel is heated to 890°C - 925°C, and the temperature is kept for 5min - 8min.

7. The method according to claim 5, wherein the steel to be treated undergoes a continuous annealing step before the hot-dip coating, and the continuous annealing step uses a nitrogen-hydrogen mixed gas in which an oxygen content is equal to or less than 100 ppm, a dew point is -50°C - 20°C and a volume content of hydrogen is 3% - 25%.

8. A method for manufacturing a coating layer for hot stamping-formed steel, comprising:
a hot-dip coating: immersing a steel to be treated having a temperature of 580° C-750°C into a coating solution having a temperature of 580°C - 750°C and keeping for 6s - 30s, wherein, a composition of the coating solution is: 1.0wt% - 15.0wt% of Si, 0.5wt% - 10.0wt% of Cu, 0.1wt% - 1.0wt% of Cr, equal to or less than 1.0wt% of Fe, a balance is Al and inevitable impurities, wherein, during the hot-dip coating, a air knife is sprayed with inert gas, a temperature of the inert gas is 20°C - 150°C, a thickness of the coating layer is controlled within 10µm - 25µm;
a post-coating cooling: using an air cooling to cool the coated steel to a temperature equal to or less than 150°C with a cooling rate of 5°C/s - 15°C/s, and then cooling it to a room temperature by using water;
a heat treatment of the coating layer: performing a heat treatment at a temperature of 700°C - 1000°C on the cooled steel, thereby obtaining the coating layer for hot stamping-formed steel.

9. The method according to claim 8, wherein in the hot dip coating, the steel to be treated having a temperature of 620 °C - 700 °C is immersed in the coating solution having a temperature of 620 °C - 720 °C, wherein, a temperature of the inert gas is 60 °C - 100 °C, and a thickness of the coating layer is 15µm - 20µm;
in the post-coating cooling, a cooling rate is 8 °C/s - 10 °C/s or 8 °C/s -13 °C/s;
in the heat treatment of the coating layer, a temperature of the heat treatment is 750 °C - 930 °C.

10. The method according to claim 8, wherein a washing step is performed before the hot dip coating, and the steel to be treated is washed until a residue on one surface is ≤50 mg/m² and the surface reflectivity is ≥90%.

11. A coating layer for hot stamping-formed steel, comprising: 5.0wt% - 20.0wt% of Si, 0.1wt% - 10.0wt% of Ni, 0.1wt%- 10.0wt% of Cu, 0- 2.0wt% of Ce, 0 - 2.0wt% of La, 0.1wt% - 1.0wt% of Cr, equal to or less than 1.0wt% of Fe, a balance is Al and inevitable impurities, based on a total weight of the coating layer.

12. A method for manufacturing a coating layer for hot stamping-formed steel, comprising:
a hot-dip coating: immersing a steel to be treated having a temperature of 550 °C - 800 °C into a coating solution having a temperature of 570 °C - 850 °C and keeping for 6s- 30s, wherein, a composition of the coating solution is: 5.0wt%- 20.0wt% of Si, 0.1wt% - 10.0wt% of Ni, 0.1wt% - 10.0wt% of Cu, 0 - 2.0wt% of Ce, 0 - 2.0wt% of La, 0.1wt% - 1.0wt% of Cr, equal to or less than 1.0wt% of Fe, a balance is Al and inevitable impurities;
a post-coating cooling: using nitrogen or air to cool the coated steel to 150 °C at a cooling rate of 4 °C/s - 25 °C/s;
a heat treatment of the coating layer: performing a heat treatment on the cooled steel at a temperature of 700°C - 1000°C, and thereby obtaining the coating layer for hot stamping-formed steel.

13. The method according to claim 12, wherein in the hot dip coating, the steel to be treated having a temperature of 680 °C - 780 ° C is immersed in the coating solution having a temperature of 700 °C - 800 °C, and kept for 10s - 20s;
in the post-coating cooling, a cooling rate is 8 ° C/s - 15 ° C/s;
in the heat treatment of the coating layer step, a temperature of the heat treatment is 750 °C - 930 °C.

14. The method according to claim 12, wherein the steel to be treated undergoes a continuous annealing step before the hot dip coating, and the continuous annealing step uses nitrogen-hydrogen mixed gas in which an oxygen content is equal to or less than 100 ppm, a dew point is -50°C - 20°C and a volume content of hydrogen is 3% - 25%.

15. The method according to claim 12, wherein a washing step is performed before the hot dip coating, and the steel to be treated is washed until a residue on a one surface is ≤50 mg/m² and the surface reflectivity is ≥90%.
